# EUROPÄISCHE PATENTANMELDUNG

(11) **EP 2 199 027 A1**
(43) Veröffentlichungstag der Anmeldung: **23.06.2010**
(21) Anmeldenummer: 09176720.2
(22) Anmeldetag: 23.11.2009
(51) Int. Cl.: B25C 1/06, F16F 1/12

(54) **Handgeführtes Eintreibgerät**

(30) Priorität: 17.12.2008 DE 102008054816
(71) Anmelder: HILTI Aktiengesellschaft, 9494 Schaan (LI)
(72) Erfinder: Schiestl, Ulrich, 6845 Hohenems (AT)
(74) Vertreter: Söllner, Oliver

(57) **Zusammenfassung**

Die vorliegende Erfindung betrifft ein handgeführtes Eintreibgerät (10) für Befestigungselemente (60), mit einer Antriebsanordnung (30) für einen in einer Führung (12) versetzbar gelagerten Eintreibstössel (13), die wenigstens ein über eine Spanneinrichtung (70) spannbares Antriebsfederelement (31) für den Eintreibstössel (13) aufweist, welches als Schraubenfeder ausgebildet ist und eine Federachse (A) definiert. An wenigstens einem Ende (31 a, 31 b) des Antriebsfederelements (31) ist ein Krafteinleitungselement (36) drehmomentübertragend festgelegt, welches wenigstens einen Krafteinleitungsabschnitt (37) aufweist.

## Beschreibung

Die vorliegende Erfindung betrifft ein handgeführtes Eintreibgerät der im Oberbegriff von Patentanspruch 1 genannten Art. Derartige handgeführte Eintreibgeräte verfügen über einen versetzbar geführten Eintreibstössel, über den Befestigungselemente in einen Untergrund eintreibbar sind.

Als Antriebsquelle für den Eintreibstössel dient dabei eine mechanische Antriebsfeder, die über einen Spannmechanismus spannbar ist. Von Vorteil ist dabei, dass die mechanische Antriebsfeder kostengünstig ist, wodurch ein derartiges Eintreibgerät preiswert herzustellen ist. Vielfach eingesetzt bei derartigen Setzgeräten werden Schraubenfedern als Antriebsfedern. Diese bestehen aus einem helixartig gewundenen Draht, wobei die Windungen zusammen eine zylinder- oder kegelförmige Antriebsfeder formen, die ihre Federwirkung entlang einer Federachse (bzw. Zylinder- oder Kegelachse) entfalten. Die Schraubenfeder kann als Zug- oder Druckfeder gebaut werden, je nachdem, ob die befederte Bewegung in Richtung Zusammendrücken oder Auseinanderziehen der Antriebsfeder wirkt. Die zumeist verwendete Schraubendruckfeder besteht einerseits aus den federnden Windungen (die die eigentliche Federarbeit übernehmen) und andererseits aus den zwei Federenden, deren Aufgabe es ist, die an der Antriebsfeder angreifenden Druckkräfte auf die Antriebsfeder zu übertragen. Dabei ist es wichtig, dass die Druckkräfte zentrisch, also koaxial mit der Federachse, auf die Antriebsfeder wirken, da die Druckfeder sonst ausknickt. Allgemein wird dieses Problem dadurch gelöst, dass die letzten Federwindungen etwas "angelegt" werden und die letzte Windung geschliffen wird, so dass eine plane Anlagefläche auf ca. 3/4 des Federumfangs entsteht. Dadurch erreicht man, dass die an der planen Fläche anliegenden Bauteile zentrisch auf die Antriebsfeder drücken, so dass die Antriebsfeder beim Zusammendrücken nicht ausknickt.

Ein aus der US 3 924 692 bekanntes Eintreibgerät weist eine derartige Schraubenfeder als Antriebsfeder auf, deren letzte Windungen jeweils geschliffen sind. Die Antriebsfeder ist dabei über einen Spannmechanismus, der einen Elektromotor aufweist, spannbar.

Von Nachteil bei einem derartigen Eintreibgerät ist, dass die üblicherweise verwendeten Stahlfedern vergleichsweise schwer sind. Dies ist für bestimmte Anwendungen, wo es entweder auf ein niedriges Bauteilgewicht oder auf eine hohe Federdynamik ankommt, ungünstig.

Um die Nachteile der Stahlfedern zu vermeiden ist in der WO 2007/142997 A2 vorgeschlagen worden, bei einem Eintreibgerät Schraubenfedern aus einem faserverstärkten Kunststoffmaterial (Compositefedern) zu verwenden. Die Compositefeder liegt dort an ihren Enden jeweils auf schraubenförmigen Endstücken auf, wodurch die auf die Compositefeder wirkende Druckkraft auf einen grösseren Teil des Umfangs der Compositefeder verteilt wird.

Von Nachteil bei dieser Lösung ist aber, dass, wenn die Compositefeder zusammengedrückt wird, sich die Steigung bzw. der Neigungswinkel ihrer Windungen ändert. Durch den veränderten Steigungswinkel liegt die letzte Windung aber nicht mehr flächig auf dem schraubenförmigen Endstück auf, da ja die Geometrie des Endstücks unabhängig von der Federbelastung konstant bleibt. Damit tritt wieder das Problem auf, dass die Federkraft nur punktuell und damit nicht zentrisch an der Compositefeder angreift.

Allgemein besteht ein weiterer Nachteil derartiger Compositefedern darin, dass sie aus Fertigungsgründen nicht mit angelegten und/oder geschliffenen Federenden hergestellt werden können, ohne einen nicht vertretbaren Aufwand treiben zu müssen.

Die Aufgabe der vorliegenden Erfindung liegt daher darin, ein Eintreibgerät der vorgenannten Art zu entwickeln, das die vorgenannten Nachteile vermeidet und auf technisch einfache Weise eine axiale Krafteinleitung einer Druckkraft bei Eintreibgeräten, insbesondere mit Compositefedern, ermöglicht.

Diese Aufgabe wird erfindungsgemäss durch die in Anspruch 1 genannten Massnahmen gelöst. Demnach ist an wenigstens einem Ende des Antriebsfederelements ein Krafteinleitungselement drehmomentübertragend festgelegt, welches wenigstens einen Krafteinleitungsabschnitt aufweist. Hierdurch wird zum einen ohne grossen Aufwand eine zentrische Krafteinleitung auf die Antriebsfeder erreicht. Zum anderen wird erreicht, dass auch auf wenigstens eines der Enden der Antriebsfeder eine Torsionskraft bei der Kompression der Antriebsfeder ausgeübt werden kann (d. h. dass das vom Krafteinleitungselement auf das Federende übertragene Drehmoment tordierend auf das Antriebsfederelement wirkt), wodurch das wenigstens eine Ende gleich belastet wird wie die federnden Windungen der zentrisch belasteten Antriebsfeder. Es wird somit dieselbe Wirkung erzielt, wie bei Stahlfedern mit angelegten geschliffenen Federwindungen.

Vorteilhaft erstreckt sich das Krafteinleitungselement von dem Ende des Antriebsfederelements zur Federachse hin, wobei an seinem im Bereich der Federachse liegenden freien Endbereich der wenigstens eine Krafteinleitungsabschnitt angeordnet ist, der eine zur Federachse zentrische Krafteinleitung ermöglicht.

Von Vorteil kann es ferner sein, wenn der Krafteinleitungsabschnitt des Krafteinleitungselements wenigstens zwei auf einer Linie liegende Krafteinleitungsstellen aufweist, wobei die Linie quer zur Federachse und mit einem maximalen Abstand zur Federachse von 0 bis 20% des Federdurchmessers verläuft. Unter quer zur Federachse wird dabei nicht nur im rechten Winkel zu Federachse verlaufend verstanden sondern sämtliche Verläufe der Linie, die eine durch die Federachse verlaufende Ebene kreuzen. Durch diese Massnahme bleibt der Bereich der Federachse frei für andere Bauteile, die zentrisch durch die Feder verlaufen müssen, wie z. B. eine Spindel oder eine Führungsstange. Ausserdem kann dadurch, dass die Kraft über zwei Stellen eingeleitet wird, die Kraftresultierende in den Bereich der Federachse gelegt werden, obwohl das Krafteinleitungselement selbst den Bereich der Federachse nicht berührt.

In einer vorteilhaften Ausgestaltung der Erfindung weist das Krafteinleitungselement einen das Ende des Antriebsfederelements umgreifenden Halteabschnitt auf, der über eine Drehverbindung mit dem Krafteinleitungsabschnitt verbunden ist, wobei eine durch die Drehverbindung definierte Drehachse die Federachse kreuzt. Beim Belasten des Antriebsfederelements verändert sich die Steigung der Federwindung, an der das Krafteinleitungselement angeordnet ist. Dadurch verkippt das Krafteinleitungselement. Wenn die Kraft nun über zwei Krafteinleitungsabschnitte eingeleitet wird, führt das Verkippen dazu, dass einer der Krafteinleitungsabschnitte von seiner Abstützstelle abheben möchte und so über diesen Krafteinleitungsabschnitt keine Kraft mehr übertragen wird. Durch die als Drehgelenk ausfgebildete Drehverbindung wird nun erreicht, dass das Krafteinleitungselement nicht verkippt, obwohl sich die Steigung der Federwindungen ändert.

Vorteilhaft ist der Krafteinleitungsabschnitt als ringförmiger Krafteinleitungsabschnitt ausgebildet, der koaxial zur Federachse liegt, wodurch eine optimale, zentrisch zur Federachse liegende Krafteinleitung auf das Antriebsfederelement ermöglicht wird. Unter ringförmig werden dabei nicht nur ringförmig geschlossene Strukturen verstanden, sondern auch offene, wie z. B. C-förmige.

In einer günstig zu fertigenden Ausgestaltung ist das Krafteinleitungselement zumindest bereichsweise als längliche Strebe ausgebildet, die mit dem an ihrem dem Krafteinleitungsabschnitt abgewandten Endbereich angeordneten Halteabschnitt das Ende des Antriebsfederelements umgreift. Der Halteabschnitt kann dabei z. B. über eine Spannverbindung mittels Spannelement, wie z. B. einer Spannschraube, über eine Presspassung, über eine formschlüssige Verbindung mittels Verdrehsicherungselementen (Querstifte, Passfedern, Madenschrauben, Verzahnungsgeometrie) oder stoffschlüssig z. B. über eine Klebeverbindung mit dem Ende der Antriebsfeder verbunden sein.

Von Vorteil ist es ausserdem, wenn an jedem Ende des Antriebsfederelements jeweils ein Krafteinleitungselement angeordnet ist, so dass eine zentrische Krafteinleitung an beiden Enden des Federelementes gewährleistet ist und auf beide Enden der Antriebsfeder eine Torsionskraft eingeleitet werden kann.

In den Zeichnungen ist die Erfindung in mehreren Ausführungsbeispielen dargestellt.

Es zeigen:
- Fig. 1: ein erfindungsgemässes Eintreibgerät im Längsschnitt in seiner Ausgangsstellung,
- Fig. 2: ein Detail des Eintreibgeräts gemäß der Markierung II aus Fig. 1,
- Fig. 3: ein Detail eines weiteren Eintreibgeräts entsprechend der Darstellung in Fig. 2,
- Fig. 4: ein Detail eines weiteren Eintreibgeräts entsprechend Fig. 3, jedoch in Ansicht parallel zur Federachse,
- Fig. 5: ein Detail eines weiteren Eintreibgeräts entsprechend der Darstellung in Fig. 4.

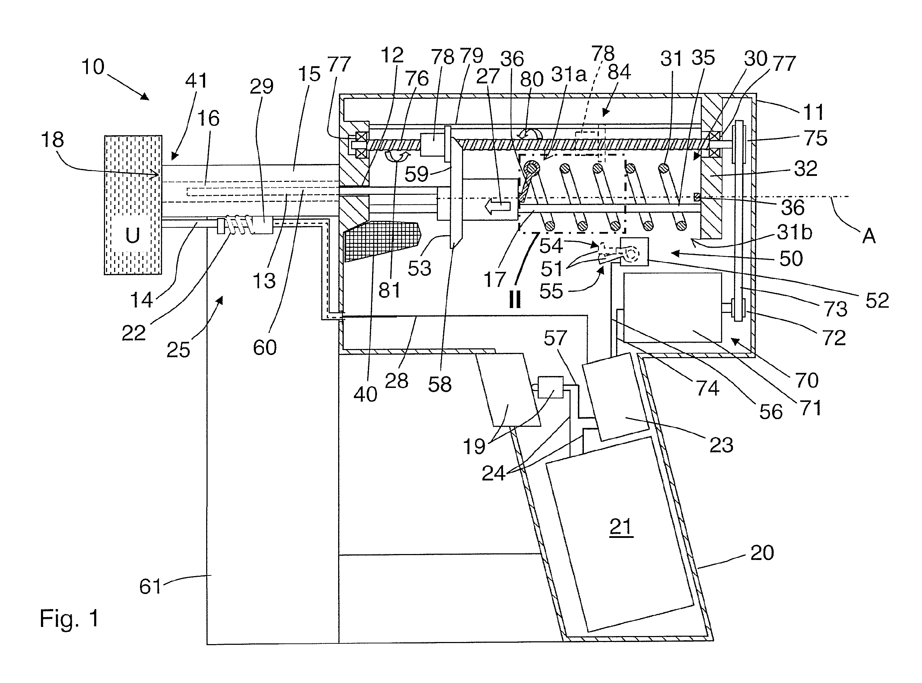

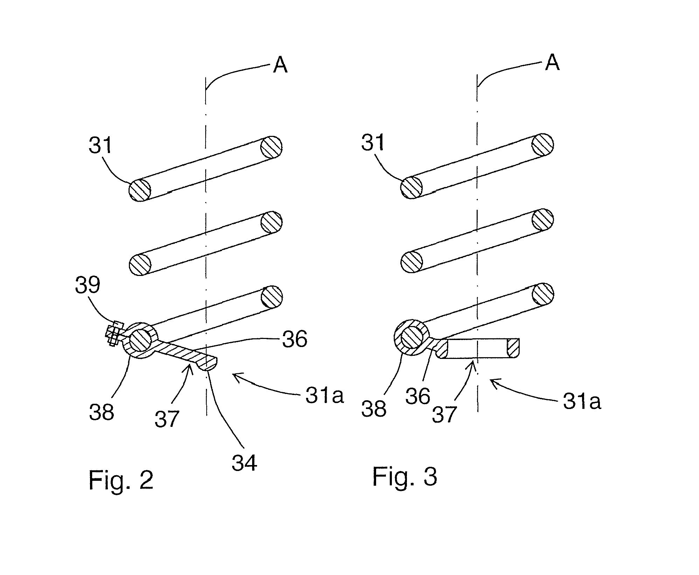

Das in den Figuren 1 und 2 dargestellte handgeführte Eintreibgerät 10 ist elektrisch betrieben und weist ein Gehäuse 11 und eine darin angeordnete, insgesamt mit 30 bezeichnete Antriebsanordnung für einen Eintreibstössel 13 auf, der in einer Führung 12 versetzbar geführt ist und der ferner mit einem Führungsabschnitt 35 an einem ersten Führungselement 17 geführt ist. Die Antriebsanordnung 30 beinhaltet ein sich entlang einer Federachse A erstreckendes Antriebsfederelement 31, welches sich mit einem ersten Ende 31a am Eintreibstössel 13 und mit einem zweiten Ende 31b an einer Abstützstelle 32 am Gehäuse 11 abstützt. Wie aus Figur 2 ersichtlich ist, weist das Antriebsfederelement 31 dazu an seinen beiden Enden 31a, 31b angeordnete Krafteinleitungselemente 36 auf, die jeweils mit einem an ihren ersten Endbereichen ausgebildeten Halteabschnitt 38 ein Ende 31a, 31b des Antriebsfederelements 31 umgreifen und an diesem drehmomentübertragend festgelegt sind. In der in Fig. 2 dargestellten Ausführungsform ist der Halteabschnitt 38 dabei am Antriebsfederelement 31 über ein Schraubmittel 39 festgespannt. An dem, dem ersten Endbereich abgewandten freien Endbereichen der Krafteinleitungselemente 36 sind jeweils Krafteinleitungsabschnitte 37 angeordnet, die im Bereich der Federachse A liegen. Nach Fig. 2 ist der Krafteinleitungsabschnitt 37 ballig ausgebildet, liegt in der Federachse A und bildet die Anlagefläche zur Anlage an den Eintreibstössel 13 bzw. zur Abstützstelle 32 (Krafteinleitungsabschnitt 37 zur Abstützstelle 32 hin in Fig. 2 nicht dargestellt) aus. Durch das Krafteinleitungselement 36 wird eine axiale Krafteinleitung und Kraftausgabe ermöglicht, wobei auf das Ende 31a, 31b des Antriebsfederelements 31 durch die drehmomentübertragende Verbindung ein Torsionsmoment übertragen werden kann, das genau dem in der restlichen Feder wirkenden Torsionsmoment entspricht. Dadurch befindet sich die kraftbeaufschlagte Feder immer in einem mechanischen Gleichgewichtszustand, so dass diese nicht ausknickt.

An dem in Eintreibrichtung 27 liegenden Ende der Führung 12 schliesst sich ein Mündungsteil 15 mit einem koaxial zur Führung 12 verlaufenden Eintreibkanal 16 für die Befestigungselemente 60 an. Seitlich von dem Mündungsteil 15 abragend ist ein Befestigungselementemagazin 61 angeordnet, in dem Befestigungselemente bevorratet werden können.

Das Eintreibgerät 10 weist ferner noch einen Handgriff 20 auf, an dem ein Auslöseschalter 19 zum Auslösen eines Eintreibvorganges mit dem Eintreibgerät 10 angeordnet ist. In dem Handgriff 20 ist ferner noch eine insgesamt mit 21 bezeichnete Stromversorgung angeordnet, über die das Eintreibgerät 10 mit elektrischer Energie versorgt wird. Vorliegend beinhaltet die Stromversorgung 21 wenigstens einen Akkumulator. Die Stromversorgung 21 ist über elektrische Versorgungsleitungen 24 sowohl mit einer elektrischen Steuereinheit 23 als auch mit dem Auslöseschalter 19 verbunden. Der Auslöseschalter 19 ist ferner über eine Schalterleitung 57 mit der Steuereinheit 23 verbunden.

An dem Mündungsteil 15 des Eintreibgerätes 10 ist ein als Anpressfühler ausgebildetes Anpresselement 14 einer Sicherheitseinrichtung 25 angeordnet, über das ein elektrischer Anpressschalter 29 der Sicherheitseinrichtung 25 betätigbar ist, der über eine Schaltmittelleitung 28 elektrisch mit der Steuereinheit 23 verbunden ist. Der elektrische Anpressschalter 29 sendet ein elektrisches Signal an die Steuereinheit 23, sobald das Eintreibgerät 10 mit einer Mündung 18 des Mündungsteils 15 an ein Werkstück U angedrückt wird, wie aus Fig. 1 ersichtlich ist, und stellt so sicher, dass das Eintreibgerät 10 nur ausgelöst werden kann, wenn es ordnungsgemäss an ein Werkstück U angedrückt worden ist. Das Anpresselement 14 ist dazu entlang einer parallel zum Eintreibkanal 16 laufenden Bewegungsachse verschieblich und zwischen einer Ausgangsstellung und einer Anpressstellung (in den Figuren nicht dargestellt) versetzbar. Das Anpresselement 14 ist dabei über ein Federelement 22 in Richtung auf seine Ausgangsstellung elastisch beaufschlagt.

An dem Eintreibgerät 10 ist ferner noch eine insgesamt mit 70 bezeichnete Spanneinrichtung angeordnet. Diese Spanneinrichtung 70 umfasst einen elektrisch betriebenen Motor 71, über den eine Gewindespindel 76 antreibbar ist, die an zwei Lagern 77 drehbar, aber ansonsten nicht versetzbar, im Gehäuse 11 gelagert ist. Der Motor 71 ist über eine zweite Steuerleitung 74 elektrisch mit der Steuereinheit 23 verbunden und kann über diese in Betrieb gesetzt werden, z. B. wenn bei einem Anpressvorgang der Anpressschalter 29 über das Anpresselement 14 betätigt wird oder bereits nach erfolgtem Eintreibvorgang, wenn das Eintreibgerät 10 wieder von einem Werkstück U abgehoben wird. Der Motor 71 ist dabei so geschaltet, dass er in beiden möglichen Drehrichtungen betrieben werden kann. Auf einer Abtriebswelle des Motors 71 sitzt ein Abtriebsrad 72, das mit einem Spindelrad 75 der Gewindespindel 76 über ein Übertragungselement 73 gekoppelt ist, um die Gewindespindel 76 im Betrieb des Motors 71 in eine Drehbewegung zu versetzen. Das Übertragungselement 73 ist dabei z. B. als Riemen, Zahnriemen, Kette, Kardanwelle, Schubstange oder Zahnrad ausgebildet. Der Motor 71 ist mit seiner Abtriebswellenachse parallel zur Drehachse der Gewindespindel 76 angeordnet, wobei er zwischen zwei durch die Stirnflächen der Gewindespindel 76 definierten Ebenen angeordnet ist. Auf der Gewindespindel 76 ist eine als Kugelumlaufmutter ausgebildete Laufmutter 78 geführt, die mit dem Gewinde der Gewindespindel 76 in Eingriff steht. Über ein zweites Führungselement 79 ist die Laufmutter 78 drehfest aber axial versetzbar geführt, so dass eine Drehung der Gewindespindel 76 in einer axialen Bewegung der Laufmutter 78 resultiert. Die Laufmutter 78 fährt bei einer Bewegung entgegen der Eintreibrichtung 27 gegen einen als Vorsprung ausgebildeten Anschlag 59 des Eintreibstössels 13 (siehe insbesondere Fig. 1), der dadurch mit der Laufmutter 78 mitbewegt werden und in seine setzbereite Stellung bewegt werden kann. Das Antriebsfederelement 31 kann dabei von seiner Entspannstellung in seine Spannstellung (siehe Fig. 3) überführt werden.

Zum Halten des Eintreibstössels 13 in seiner eintreibbereiten Stellung (in den Figuren nicht dargestellt) ist eine insgesamt mit 50 bezeichnete Sperreinrichtung vorgesehen, die eine Klinke 51 aufweist, die in einer Sperrstellung 54 (gestrichelt) an einer Sperrfläche 53 an einem Vorsprung 58 des Eintreibstössels 13 angreift und diesen gegen die Kraft des Antriebsfedermittels 31 festhält. Die Klinke 51 ist dabei an einem Stellmotor 52 gelagert und über diesen in eine in Fig. 1 dargestellte Freigabestellung 55 überführbar. Der Stellmotor 52 ist über eine elektrische erste Steuerleitung 56 mit der Steuereinheit 23 verbunden, die Stellbefehle an den Stellmotor 52 übermittelt.

Wird das Eintreibgerät 10 an ein Werkstück U angedrückt, wie aus Fig. 1 ersichtlich, dann wird zunächst über das Anpresselement 14 und den elektrischen Anpressschalter 29 die Steuereinheit 23 in Setzbereitschaft versetzt und ein Schaltbefehl an den Motor 71 abgegeben, der über das Abtriebsrad 72, das Übertragungselement 73 und das Spindelrad 75 die Gewindespindel 76 in eine Rotation in Drehrichtung des ersten Pfeils 80 versetzt. Auf Grund der Rotation der Gewindespindel 76 wird die auf ihr geführte Laufmutter 78 entgegen der Eintreibrichtung 27 axial versetzt und von ihrer ersten Endposition (in der Figur nicht dargestellt) am mündungsseitigen Ende der Gewindespindel 76 in ihre zweite Endposition 84 (siehe gestrichelte Laufmutter 78 in Fig. 1) bewegt. Dabei läuft die Laufmutter 78 gegen den Anschlag 59 des Eintreibstössels 13 und verfährt diesen entgegen der Eintreibrichtung 27 bis in seine setzbereite Stellung, in der die Klinke 51 der Sperreinrichtung 50 automatisch an der Sperrfläche 53 am Vorsprung 58 des Eintreibstössels 13 einfällt. Das Antriebsfederelement 31 wird dabei gespannt und von seiner Entspannstellung in seine Spannstellung (in den Figuren nicht dargestellt) überführt.

Sobald die Klinke 51 der Sperreinrichtung 50 in die Sperrfläche 53 am Eintreibstössel 13 eingefallen ist und sich die Sperreinrichtung 50 in ihrer Sperrstellung 54 befindet (in den Figuren nicht dargestellt), erhält die Steuereinheit 23 ein entsprechendes Signal, woraufhin die Steuereinheit 23 den Motor 71 in seine zweite Drehrichtung umschaltet. Der Motor 71 versetzt nun über das Abtriebsrad 72, das Übertragungselement 73 und das Spindelrad 75 die Gewindespindel 76 in eine Rotation in Drehrichtung des zweiten Pfeils 81. Auf Grund der Rotation der Gewindespindel 76 wird die auf ihr geführte Laufmutter 78 in Richtung der Eintreibrichtung 27 axial versetzt und von ihrer zweiten Endposition nahe der Sperreinrichtung 50 (siehe gestrichtelte Laufmutter 78 in Fig. 1) in ihre erste Endposition am mündungsseitigen Ende der Gewindespindel 76 verfahren.

Wird dann der Auslöseschalter 19 von einem Bediener betätigt, dann wird über die Steuereinheit 23 die Sperreinrichtung 50 in ihre Freigabestellung 55 versetzt, wobei die Klinke 51 über den Stellmotor 52 durch Verschwenken von der Sperrfläche 53 am Eintreibstössel 13 abgehoben wird (in Fig. 1 nicht dargestellt).

Der Eintreibstössel 13 wird daraufhin über das Antriebsfederelement 31 der Antriebsanordnung 30 in Eintreibrichtung 27 bewegt, wobei ein Befestigungselement 60 in das Werkstück U eingetrieben wird. Der Eintreibstössel 13 wird dabei am Ende des Eintreibweges von einem Dämpfungselement 40 gebremst, bevor er auf die Laufmutter 78 prallen kann, um diese nicht zu beschädigen. Dieses wenigstens eine Dämpfungselement 40 weist dazu eine axiale Distanz zu einem mit ihm zusammenwirkenden ersten Anschlag des Eintreibstössels 13 auf, die kleiner ist, als eine axiale Distanz der Laufmutter 78 in ihrer ersten Endposition zu dem der Laufmutter 78 gegenüberliegenden Anschlag 59 des Eintreibstössels 13.

Zur Überführung des Eintreibstössels 13 in die eintreibbereite Stellung und zum Spannen des Antriebsfederelementes 31 wird am Ende eines Eintreibvorganges, wenn das Eintreibgerät 10 wieder vom Werkstück U abgehoben wird, oder spätestens bei einem erneuten Anpressen des Eintreibgerätes 10 an ein Werkstück U die Spanneinrichtung 70 über die Steuereinheit 23 erneut aktiviert und der zuvor beschriebene Vorgang wiederholt.

Das in Fig. 3 mit einem Detail dargestellte Eintreibgerät unterscheidet sich nur dadurch von dem in den Figuren 1 und 2 dargestellten Eintreibgerät 10, dass das Krafteinleitungselement 36 eine andere Ausgestaltung aufweist. So sind die Halteabschnitte 38 der Krafteinleitungselemente 36 dort jeweils als geschlossene Ringe ausgebildet, die jeweils mit den Enden 31a, 31 b des Antriebsfederelements 31 verklebt sind (zweites Ende 31 b in der Fig. 3 nicht dargestellt, aber identisch ausgebildet). Ferner sind die Krafteinleitungsabschnitte 37 ringförmig ausgebildet und im Wesentlichen koaxial zur Federachse A positioniert (d. h. die Ringachse ist koaxial zur Federachse A). Wegen der weiteren Ausgestaltung des Eintreibgerätes nach Fig. 3 wird vollumfänglich auf die Beschreibung zu Fig. 1 Bezug genommen.

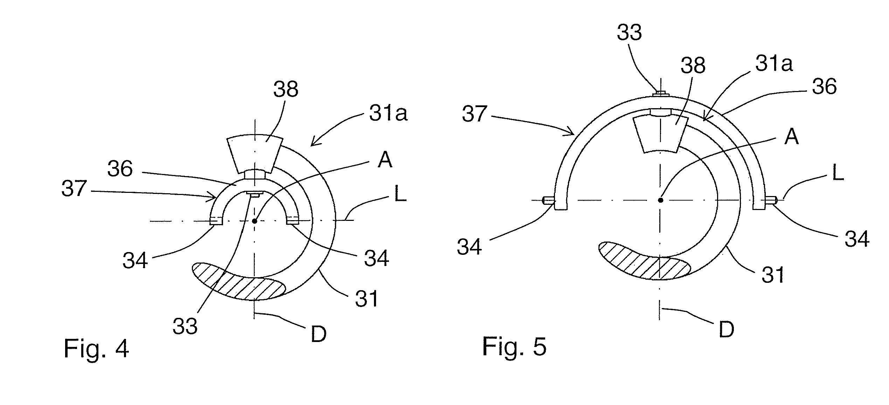

Das in Fig. 4 mit einem Detail dargestellte Eintreibgerät unterscheidet sich u. a. dadurch von dem in den Figur 3 dargestellten Eintreibgerät 10, dass die Krafteinleitungsabschnitte 37 der Krafteinleitungselemente 36 nicht als geschlossene Ringe sondern als halbkreisförmige Elemente ausgebildet sind. Die halbkreisförmigen Krafteinleitungsabschnitte 37 spannen dabei einen Durchmesser auf, der kleiner ist als der Durchmesser des Antriebsfederelements 31. An seinen beiden Enden weist jeder Krafteinleitungsabschnitt 37 jeweils eine Krafteinleitungsstelle 34 auf. Mit den beiden Krafteinleitungsstellen 34 stützt sich der Krafteinleitungsabschnitt 37 an dem Gehäuse (11 in Fig. 1) oder dem Eintreibstössel (13 in Fig. 1) ab. Beide Krafteinleitungsstellen 34 liegen auf einer Linie L, die die Federachse A kreuzt. Ferner sind die jeweils an einem Ende 31a, 31b des Antriebsfederelements 31 festgelegten ringförmigen Halteabschnitte 38 des Krafteinleitungselements 36 (zweites Ende 31 b in der Fig. 4 nicht dargestellt, aber identisch ausgebildet) über eine Drehverbindung 33 mit dem Krafteinleitungsabschnitt 37 verbunden.

Durch die Drehverbindung 33 wird erreicht, dass das Krafteinleitungselement beim Belasten des Antriebsfederelements 31 nicht verkippt, obwohl sich die Steigung der Federwindungen aufgrund des Zusammendrückens des Antriebsfederelements 31 verändert. Dadurch, dass das Krafteinleitungselement 36 nicht verkippt, bleibt auch während des Zusammendrückens des Antriebsfederelements 31 gewährleistet, dass sich beide Krafteinleitungsstellen 34 des Krafteinleitungselements 36 immer gleichmässig am Gehäuse 11 bzw. dem Eintreibstössel 13 abstützen, wodurch wiederum sichergestellt ist, dass die Wirkungslinie der Resultierenden der an den Krafteinleitungsabschnitten 37 angreifender Kräfte immer im Bereich der Federachse A bleibt.

Wegen der weiteren Ausgestaltung des Eintreibgerätes nach Fig. 4 wird vollumfänglich auf die Beschreibung zu Fig. 1 Bezug genommen.

Das in Fig. 5 mit einem Detail dargestellte Eintreibgerät unterscheidet sich nur dadurch von dem in den Figur 4 dargestellten Eintreibgerät 10, dass die halbkreisförmigen Krafteinleitungsabschnitte 37 der Krafteinleitungselemente 36 Durchmesser aufspannen, die grösser sind, als der Durchmesser des Antriebsfederelements 31. Auch bei dieser Ausführungsform weist jeder der Krafteinleitungsabschnitte 37 an seinen beiden Enden jeweils eine Krafteinleitungsstelle 34 auf. Mit den beiden Krafteinleitungsstellen 34 stützt sich der Krafteinleitungsabschnitt 37 an dem Gehäuse (11 in Fig. 1) oder dem Eintreibstössel (13 in Fig. 1) ab. Beide Krafteinleitungsstellen 34 liegen wieder auf einer Linie L, welche die Federachse A kreuzt. Ferner sind die jeweils an einem Ende 31a, 31b des Antriebsfederelements 31 festgelegten ringförmigen Halteabschnitte 38 des Krafteinleitungselements 36 (zweites Ende 31 b in der Fig. 5 nicht dargestellt, aber identisch ausgebildet) ebenfalls über eine Drehverbindung 33 mit dem Krafteinleitungsabschnitt 37 verbunden. Wegen der weiteren Ausgestaltung des Eintreibgerätes nach Fig. 5 wird vollumfänglich auf die Beschreibung zu den Figuren 1 und 4 Bezug genommen.

## Patentansprüche

1. Handgeführtes Eintreibgerät für Befestigungselemente, mit einer Antriebsanordnung (30) für einen in einer Führung (12) versetzbar gelagerten Eintreibstössel (13), die wenigstens ein über eine Spanneinrichtung (70) spannbares Antriebsfederelement (31) für den Eintreibstössel (13) aufweist, welches als Schraubenfeder ausgebildet ist und eine Federachse (A) definiert,
**dadurch gekennzeichnet,**
**dass** an wenigstens einem Ende (31 a, 31 b) des Antriebsfederelements (31) ein Krafteinleitungselement (36) drehmomentübertragend festgelegt ist, welches wenigstens einen Krafteinleitungsabschnitt (37) aufweist.

2. Eintreibgerät nach Anspruch 1, **dadurch gekennzeichnet, dass** sich das Krafteinleitungselement (36) von dem Ende (31a, 31b) des Antriebsfederelementes (31) zur Federachse (A) hin erstreckt und an seinem im Bereich der Federachse (A) liegenden freien Endbereich der wenigstens eine Krafteinleitungsabschnitt (37) angeordnet ist.

3. Eintreibgerät nach Anspruch 1 oder 2, **dadurch gekennzeichnet, dass** der Krafteinleitungsabschnitt (37) des Krafteinleitungselements (36) wenigstens zwei auf einer Linie (L) liegende Krafteinleitungsstellen (34) aufweist, wobei die Linie (L) quer zur Federachse (A) und mit einem maximalen Abstand zur Federachse (A) von 0 bis 20% des Federdurchmessers verläuft.

4. Eintreibgerät nach einem der Ansprüche 1 bis 3, **dadurch gekennzeichnet, dass** das Krafteinleitungselement (36) einen das Ende (31a, 31b) des Antriebsfederelements (31) umgreifenden Halteabschnitt (38) aufweist, der über ein Drehverbindung (33) mit dem Krafteinleitungsabschnitt (37) verbunden ist, wobei eine durch die Drehverbindung definierte Drehachse (D) die Federachse (A) kreuzt.

5. Eintreibgerät nach einem der Ansprüche 1 bis 4, **dadurch gekennzeichnet, dass** der Krafteinleitungsabschnitt (37) als ringförmiger Krafteinleitungsabschnitt (37) ausgebildet ist, der koaxial zur Federachse (A) liegt.

6. Eintreibgerät nach einem der Ansprüche 1 bis 5, **dadurch gekennzeichnet, dass** das Krafteinleitungselement (36) zumindest bereichsweise als längliche Strebe ausgebildet ist, die mit dem an ihrem dem Krafteinleitungsabschnitt (37) abgewandten Endbereich angeordneten Halteabschnitt (38) das Ende (31 a, 31 b) des Antriebsfederelements (31) umgreift.

7. Eintreibgerät nach einem der Ansprüche 1 bis 6, **dadurch gekennzeichnet, dass** an jedem Ende (31 a, 31 b) des Antriebsfederelements (31) jeweils ein Krafteinleitungselement (36) angeordnet ist.
